# EUROPÄISCHE PATENTSCHRIFT

(11) **EP 3 253 547 B1**
(45) Veröffentlichungstag und Bekanntmachung des Hinweises auf die Patenterteilung: **24.07.2019**
(21) Anmeldenummer: 16701134.5
(22) Anmeldetag: 20.01.2016
(51) Int. Cl.: B29C 45/00, B65D 41/00, C08G 63/181, C08G 63/672, C08G 63/91, C08L 67/02, B29L 31/00, B29K 67/00

(54) **VERFAHREN ZUR HERSTELLUNG DÜNNWANDIGER KUNSTSTOFFKLEINTEILE UND DÜNNWANDIGE KUNSTSTOFFKLEINTEILE**
METHOD FOR PRODUCING THIN-WALLED SMALL PLASTIC PARTS AND THIN-WALLED SMALL PLASTIC PARTS
PROCÉDÉ DE FABRICATION DE PETITES PIÈCES EN PLASTIQUE À PAROI MINCE ET PETITES PIÈCES EN PLASTIQUE À PAROI MINCE

(30) Priorität: 06.02.2015 CH 1602015
(43) Veröffentlichungstag der Anmeldung: 13.12.2017
(73) Patentinhaber: Alpla-Werke Alwin Lehner GmbH und Co. KG, 6971 Hard (AT)
(72) Erfinder: SIEGL, Robert, 6850 Dornbirn (AT)
(74) Vertreter: Bohest AG Branch Ostschweiz
(86) Internationale Anmeldenummer: PCT/EP2016/051129
(87) Internationale Veröffentlichungsnummer: WO 2016/124404

(56) Entgegenhaltungen:
- WO-A1-2013/158477
- WO-A1-2015/015243
- GRUTER GERT-JAN M ET AL: "Accelerating research into bio-based FDCA-polyesters by using small scale parallel film reactors", COMBINATORIAL CHEMISTRY AND HIGH THROUGHPUT SCREENING, BENTHAM SCIENCE PUBLISHERS, NL, Bd. 15, Nr. 2, Januar 2012 (2012-01), Seiten 180-188, XP009170411, ISSN: 1386-2073
- GEORGE Z. PAPAGEORGIOU ET AL: "Synthesis of poly(ethylene furandicarboxylate) polyester using monomers derived from renewable resources: thermal behavior comparison with PET and PEN", PHYSICAL CHEMISTRY CHEMICAL PHYSICS., Bd. 16, Nr. 17, Januar 2014 (2014-01), Seite 7946, XP055258954, GB ISSN: 1463-9076, DOI: 10.1039/c4cp00518j

## Beschreibung

Die Erfindung betrifft ein Verfahren zur Herstellung dünnwandiger Kunststoffteile gemäss dem Oberbegriff des Patentanspruchs 1. Die Erfindung betrifft auch dünnwandige Kunststoffkleinteile.

Unter Kunststoffkleinteilen im Sinne der vorliegenden Erfindung werden Verschlüsse beispielsweise für Getränkeverpackungen, Teile von Verpackungen, wie z.B. Tubenschultern, ganze Verpackungen, wie z.B. Becher, kapselartige Behälter und blisterartige Verpackungen (Pads) für Kaffee, Kakao oder Tee, und dergleichen mehr bezeichnet. Als dünnwandig im Sinne der vorliegenden Erfindung werden Kunststoffkleinteile angesehen, die eine durchschnittliche Wandstärke von weniger als 1,5 mm aufweisen.

Derartige dünnschichtige Kunststoffkleinteile werden üblicherweise aus Massenkunststoffen, wie beispielsweise Polyethylen (PE), Polypropylen (PP), Polyethylenterephthalat (PET), Polystyrol (PS) oder Polyvinylchlorid (PVC) hergestellt. Da Kunststoffkleinteile aus diesen Massenkunststoffen nicht zuletzt auch wegen ihrer Dünnwandigkeit gegenüber Sauerstoff, Kohlendioxid und Wasserdampf nur relativ schlechte Barriereeigenschaften aufweisen, werden bei der Herstellung der Kunststoffkleinteile aus diesen Materialien üblicherweise zusätzliche Barriereschichten vorgesehen, oder die Kunststoffe müssen vor ihrer Verarbeitung zu den Kunststoffkleinteilen mit Barriereadditiven vermengt werden. Als Barriereschicht kommen beispielsweise Ethylen-Vinylalkohol-Copolymer (EVOH), Polyglykolsäure (PGA) oder Polyamid zum Einsatz. Vielfach kommen auch Beschichtungen der Kunststoffkleinteile mit Plasmabeschichtungen, beispielsweise Kohlenstoffbeschichtungen (DLC) oder auch dünne Titan-, Aluminium- oder Siliziumoxidbeschichtungen, zur Anwendung, um die geforderten Barriereeigenschaften zu erzielen.

Die Herstellung derartiger dünnwandiger Kunststoffkleinteile erfolgt üblicherweise durch Thermoformen (Tiefziehen) aus einer mehrschichtigen Folie. Die Herstellung mehrlagiger Folien ist relativ einfach und am Markt weit verbreitet. Thermoformen (Tiefziehen) stellt Folien ist relativ einfach und am Markt weit verbreitet. Thermoformen (Tiefziehen) stellt einen klassischen Anwendungsbereich, insbesondere für die Herstellung von Verpackungen beispielswese in der Lebensmittelindustrie, dar und ist hinlänglich erprobt.

Der Einsatz mehrschichtiger Folien oder Platten beim Thermoformen erweist sich jedoch für eine Rezyklierung als negativ, da die mehrschichtigen Kunststoffkleinteile, wenn überhaupt, nur sehr schwer von den Einzelmaterialien separiert werden können. Im Fall des Thermoformen fällt oft auch noch ein Stanzgitter an, das nur schwer oder gar nicht dem Rezyklierungs-Prozess zugeführt werden kann. Dadurch können die angestrebten oder auch vorgeschriebenen Rezyklierungsquoten oftmals nicht erreicht werden.

In der WO 2015/015243 A1 ist ein Kunststoffbehälter beschrieben, der in einem Streckblasverfahren aus einem Preform aus Polyethylenfuranoat hergestellt ist. Der Druckschrift sind jedoch keine Angaben bezüglich der rheologischen Eigenschaften, insbesondere hinsichtlich der Viskosität und des Wassergehalts des eingesetzten Kunststoffs zu entnehmen.

In der WO 2013/158477 A1 ist eine Einzelschicht-Kapsel bestehend aus neu-hergestelltem oder regeneriertem Polyethylenfuranoat beschrieben. Die Einzelschicht-Kapsel ist in einem Spritzgiessverfahren hergestellt.

Gruter Gert-Jan M. et al. beschreiben in dem Artikel "Accelerating research into bio-based FDCA-polyesters by using small scale parallel film reactors", in COMBINATORIAL CHEMISTRY AND HIGH THROUGHPUT SCREENING, BENTHAM SCIENCE PUBLISHERS, NL, Bd. 15, Nr. 2, Januar 2012 (2012-01), Seiten 180-188, ISSN 1386-2073 ein Screening-Verfahren zur Katalysatorentwicklung für die Herstellung von Polyethylenfuranoat.

Aufgabe der vorliegenden Erfindung ist es daher, den geschilderten Nachteilen der dünnwandigen Kunststoffkleinteile des Stands der Technik abzuhelfen. Es soll ein Verfahren zur Herstellung derartiger dünnwandiger Kunststoffkleinteile geschaffen werden, mit dem Kunststoffkleinteile herstellbar sind, die nach ihrem bestimmungsgemässen Gebrauch einfacher rezykliert werden können.

Die Lösung dieser Aufgabe besteht in Verfahren zur Herstellung dünnwandiger Kleinkunststoffteile, welches die im Patentanspruch 1 angeführten Merkmale aufweist. Die Aufgabe wird erfindungsgemäss auch durch dünnwandige Kunststoffkleinteile gelöst, welche die Merkmale des entsprechenden Vorrichtungsanspruchs aufweisen. Weiterbildungen und/oder vorteilhafte Ausführungsvarianten der Erfindung sind Gegenstand der abhängigen Patentansprüche.

Die Erfindung schlägt ein Verfahren zur Herstellung dünnwandiger Kunststoffkleinteile mit einer mittleren Wandstärke kleiner als 1,5 mm vor, bei dem die Kunststoffkleinteile in einem Kunststoffspritzgiessverfahren aus Polyethylenfuranoat (PEF) mit einer Viskosität von 0,4 dl/g bis 0,7 dl/g, vorzugsweise kleiner als 0,6 dl/g, gemessen nach einer Messmethode analog zur ASTM D4603, die den Test bei PET Materialien beschreibt, hergestellt werden, welches beim Kunststoffspritzen einen Wassergehalt von weniger als 100 ppm aufweist. Idealerweise ist der Wassergehalt beim Kunststoffspritzen kleiner als 30 ppm.

Durch die Verwendung von Polyethylenfuranoat (PEF) mit einer sehr geringen Viskosität können die Kunststoffkleinteile sehr wirtschaftlich in einem Kunststoffspritzgiessverfahren hergestellt werden. Die Viskosität wird dabei nach einer Messmethode analog der ASTM D4603 bestimmt. Diese genormte Messmethode wurde zwar für die Ermittlung der Viskosität von PET entwickelt, ist jedoch in analoger Form auf PEF anwendbar. Die Messmethode für die Viskosität des PEF analog zu derASTM D4603 wird gewählt, da für den Werkstoff PEF noch keine speziellen Norm für die Viskositätsmessung existiert.

Die Verwendung eines sehr dünnflüssigen PEF als Ausgangsmaterial verringert dessen Herstellkosten, da auf einen zeitraubenden und kostenintensiven Solid State Polymerisations-Prozess (bzw. Polykondensationsprozeß) verzichtet werden kann bzw. dieser nur zu einem gringen Umfang durchgeführt werden muss, um die gewünschte Viskosität zu erreichen. Die Verwendung eines dünnflüssigen PEF hat ausserdem Vorteile beim Kunststoffspritzgiessen. Mit dem dünnflüssigen PEF können beim Kunststoffspritzgiessen viel einfacher lange dünne Fliesswege realisiert werden, ohne dass die Gefahr besteht, dass die PEF Schmelze zu früh erstarrt oder dass Orientierungen der Molekülketten in der PEF Schmelze entstehen. Dies erlaubt die Herstellung von sehr dünnwandigen und verzugsarmen Konturen im Kunststoffspritzgiessverfahren.

Die geringe Viskosität des für das Kunststoffspritzgiessverfahren eingesetzten PEF wirkt sich auch positiv auf die Barriereeigenschaften des PEF aus, da das dünnflüssigere PEF mit seinen relativ kurzen Molekülketten deutlich mobiler ist und dadurch viel schneller zur Kristallisation bis zu einem gewünschten Kristallisationsgrad gebracht werden kann. Für die Barriereeigenschaften und auch für die Hitzebeständigkeit des spritzgegossenen dünnwandigen Kunststoffkleinteils ist ein höherer Kristallisationsgrad von Vorteil. Andererseits ist eine höhere Amorphität des Kunststoffkleinteils für die Kaltschlagzähigkeit von Vorteil. Beispielsweise weist bereits amorphes PEF im den Faktor 10 höhere Barriereeigenschaften gegenüber Sauerstoff auf als PET vergleichbarer Wandstärke. Im Vergleich zu PP sind die Barriereeigenschaften von amorphem PEF gegenüber Sauerstoff sogar um einen Faktor von bis zu 300 besser. Auch die Barriereeigenschaften von PEF gegenüber Wasserdampf sind im Vergleich zu PET gleicher Wandstärke um den Faktor 2 besser. Daher weist bereits amorphes PEF Vorteile gegenüber den herkömmlich verwendeten Kunststoffen hinsichtlich des Erhalts des Aromas von abgefüllten Produkten auf. Dadurch können die dünnwandigen Kunststoffkleinteile als einschichtige Strukturen hergestellt werden. Die Herstellung von mehrschichtigen Folien oder Platten für das Thermoformen entfällt ebenso wie ein vielfach verwendetes Stanzgitter. Für das Kunststoffspritzgiessverfahren muss auch weniger Kunststoffmaterial erhitzt und wieder abgekühlt werden als für das Thermoumformen. Dadurch wird das an sich komplexere Kunststoffspritzgiessverfahren zu einer kostengünstigeren Alternative zum Thermoformen (Tiefziehen). Die spritzgegossenen Kunststoffkleinteile aus einschichtigem PEF können vollständig dem Rezyklierungsprozess zugeführt werden, was sich vorteilhaft auf eine angestrebte Rezyklierungsquote auswirken kann.

Das im Kunststoffspritzgiessverfahren verarbeitete PEF weist dabei einen Wassergehalt von weniger als 100 ppm auf. Vorzugsweise beträgt der Wassergehalt des im Kunststoffspritzgiessverfahren verarbeiteten PEF weniger als 30 ppm. Dazu wird das PEF vor seiner Verarbeitung getrocknet. Die Einstellung der Viskosität und des Wassergehalts des PEF vor seiner Verarbeitung im Kunststoffspritzgiessverfahren sorgen für den Erhalt der molekularen Struktur des PEF und insbesondere seiner Kettenlänge. Durch die Trocknung des PEF wird ein hydrolytischer Abbau der Ketten reduziert, und es kann eine Kettenspaltung des PEF durch Hydrolyse beim Spritzgiessen des PEF unterdrückt werden. Die Aufbereitung des PEF sollte dabei möglichst zeitnah zu dessen Weiterverarbeitung im Kunststoffspritzgiessverfahren erfolgen. Als zeitnah im Sinne der vorliegenden Erfindung wird dabei ein Zeitraum von 0 bis 2Stunden angesehen. Das für die Herstellung der dünnwandigen Kunststoffkleinteile im Kunststoffspritzgiessverfahren eingesetzte PEF kann dabei einen linearen Kettenaufbau aufweisen oder auch kleinere oder größere Verzweigungen enthalten.

In einer Verfahrensvariante kann das für das Kunststoffspritzgiessverfahren verwendete PEF 10% bis 100% bio-basiertes PEF umfassen. Die Verwendung von bio-basiertem PEF ist aus ökologischen Gründen erstrebenswert, da für die Herstellung des PEF ausschliesslich erneuerbare Stoffe zum Einsatz kommen.

In einer weiteren Verfahrensvariante kann das verwendete PEF bis zu 100% Regeneratmaterial umfassen. Infolge des Herstellverfahrens des PEF und der für die Trocknung und Weiterverarbeitung des PEF eingesetzten Temperaturen spielen allfällige geringe Verunreinigungen mit anderen Stoffen, insbesondere mit Fremdpolymeren, eine untergeordnete Rolle. Daher können spritzgegossene Kunststoffkleinteile, die Regeneratmaterial enthalten, ohne Einschränkungen in direkten Kontakt mit dem Verpackungsgut kommen.

Eine weitere Verfahrensvariante kann vorsehen, dass das PEF physikalisch oder chemisch geschäumt wird, bis es einen Schäumungsgrad von 0 % bis 30 % aufweist. Das Schäumen des PEF erfolgt dabei innerhalb der Formkavität der verwendeten Spritzgiessform.

Eine weitere Verfahrensvariante kann eine Abmischung mit leicht oxidierbaren Zuschlagsstoffen vorsehen, die mit Sauerstoff mit oder ohne Katalysator abreagieren können und so Sauerstoff vom Füllgut abhalten können. Als Katalysator kommen beispielsweise Kobaltsalze in Frage.

Zur Einstellung des gewünschten Wassergehalts kann das PEF bei einer Trocknungstemperatur getrocknet werden, welche grösser als 100°C und kleiner als 200°C ist. Der Trocknungsvorgang dient zur Einstellung des Wassergehalts des PEF und erlaubt es, das PEF Material noch teilweise aufzureinigen bzw. die Viskosität, falls erforderlich, im gewünschten Umfang anzuheben. Die Trocknung kann in einem herkömmlichen Trockner durchgeführt werden. Es kann sich jedoch als zweckmässig erweisen, wenn bei der Trocknung ein Rührwerk oder eine entsprechende Vorrichtung eingesetzt werden, um ein Verkleben des PEF Materials zu vermeiden. Je nach der anfänglichen Durchfeuchtung des PEF Materials wird eine Trocknungszeit zwischen 3 und 30 Stunden angestrebt, um eine Feuchte von weniger als 100 ppm zu erzielen. Zusätzlich kann auch noch Energie durch Infrarot- oder Mikrowellenstrahlung eingebracht werden, um die Trocknungszeit weiter zu verkürzen. Schliesslich kann die Trocknung des PEF auch noch im Vakuum oder unter einer Inertgasatmosphäre, beispielsweise unter Stickstoffatmosphäre, welche keine Reaktionen mit dem PEF eingeht, erfolgen.

In einer weiteren Verfahrensvariante kann dem PEF ein Anteil von Nukleierungsmitteln beigemengt werden, der 5% nicht überschreitet. Durch die Beimengung von Nukleierungsmitteln kann die Kristallisation gezielt beeinflusst werden. Als Nukleierungsmittel kommen beispielsweise Calziumcarbonat, Tonpulver, Silicate, Alkali-, Erdalkali-, Aluminium-, Titansalze, Organische Salze (z.B Metallsalze von Polyestern), Metalloxide Sorbitolderivate, Phosphatderivative, Talkum, Wachse, Polyolefine (PE,TPE,PP), aliphatische Polyamide zum Einsatz.

In einer alternativen Verfahrensvariante kann zur Unterdrückung der Kristallisation des PEF während des Spritzgiessens dem PEF ein Anteil von Copolymeren, beispielsweise Diethylenglykol beigemengt werden, der 10% nicht überschreitet.

Ein gemäss der Erfindung im Kunststoffspritzgiessverfahren hergestelltes dünnwandiges Kunststoffkleinteil weist eine mittlere Wandstärke von kleiner als 1,5 mm auf. Dabei besteht das Kunststoffkleinteil im wesentlichen nur aus einschichtig ausgebildetem PEF. Die einschichtige Ausbildung des Kunststoffkleinteils aus PEF erlaubt dessen vollständige Rezyklierung, was insbesondere aus ökologischer Sicht erstrebenswert erscheint.

In einer Variante der Erfindung kann das spritzgegossene dünnwandige Kunststoffkleinteil eine mittlere Wandstärke aufweisen, die kleiner ist als 1 mm. Das verwendete niederviskose PEF ist sehr dünnflüssig und erlaubt ein sehr schnelles Füllen der Formkavität der Spritzgiessform. Infolge der sehr engen Formspaltweite kann es dennoch zu einer gewissen erwünschten Kristallisation der eingespritzten PEF Schmelze kommen.

Eine Variante der Erfindung kann vorsehen, dass das dünnwandige Kunststoffkleinteil wenigstens bereichsweise einen Kristallisationsgrad von bis zu 50 % aufweist. Ein höherer Kristallisationgrad hat positive Auswirkungen auf die Barriereeigenschaften während sich die Amorphität des PEF vorteilhaft auf die Kaltschlagzähigkeit auswirken kann.

In einer Variante der Erfindung kann die Spritzgiessform beim Einspritzen der PEF Masse noch nicht vollständig geschlossen sein und wird diese erst während oder nach dem Einspritzen der PEF Masse vollständig geschlossen. Bei einer derartigen Prozessführung wird das dünnwandige Kunststoffkleinteil durch einen Spritzgiessprozeß und einen Fliesspressprozess ausgeformt. Je nachdem, wann genau die Form geschlossen wird, überwiegt der Spritzgiess- bzw. der Fliesspressprozess.

In einer weiteren Verfahrensvariante kann die thermoplastische PEF Formmasse bereits vor dem Schliessen der Form in der Formkavität eingebracht werden. In diesem Fall handelt es sich bei der Herstellung der Kunststoffkleinteile eigentlich nicht mehr um einen Spritzgiessprozess, sondern man spricht in diesem Fall von einem Fliesspressverfahren.

Das erfindungsgemässe spritzgegossene dünnwandige Kunststoffkleinteil kann als ein Verschluss, beispielsweise für eine Getränkeverpackung, als Teil einer Verpackung, beispielsweise als eine Tubenschulter, als ganze Verpackung, wie z.B. als Becher, als kapselartiger Behälter oder blisterartige Verpackung (Pad) für Kaffee, Kakao oder Tee, ausgebildet sein. Es kann insbesondere als eine Verpackung für sauerstoffempfindliche Füllgüter ausgebildet sein. Beispielsweise kann das dünnwandige Kunststoffkleinteil eine Menüschale oder ein Becher für sauerstoffempfindliche Füllgüter sein. Als kapselartige oder blisterartige Verpackung von Kaffee, Kakao oder Tee erlaubt die Ausbildung des spritzgegossenen dünnwandigen Kunststoffkleinteils eine Lagerung weitgehend ohne Aromaverlust. Dabei kann auch die Verschlussfolie für die kapselartige Verpackung aus PEF gefertigt sein, was die Rezyklierbarkeit derartiger Verpackungen enorm verbessert. Schliesslich kann das erfindungsgemässe dünnwandige Kunststoffkleinteil auch als ein Becher für Kindernahrung, für die Aufbewahrung von Pestos, Sossen oder Ketchup dienen.

Die Verwendung von niederviskosem PEF ermöglicht eine kostengünstige Fertigung von dünnwandigen Kunststoffkleinteilen in einem Kunststoffspritzgiessverfahren. Die spritzgegossenen Kunststoffkleinteile aus PEF können ohne negative Auswirkungen auf ihre Barriereeigenschaften einschichtig ausgebildet sein. Dabei sind sie hinsichtlich ihrer Barriereeigenschaften den im Thermoformen (Tiefziehen) aus Folien oder Platten aus herkömmlichen Massenkunststoffen, wie PE, PP, PET, PS oder PVC, die mit Barriereschichten aus EVOH, PGA oder PA versehen sind oder auch Beschichtungen aus amorphen Kohlenstoffschichten oder dünne Glasbeschichtungen aufweisen, zumindest ebenbürtig, in vielen Fällen sogar überlegen. Im Gegensatz zu den mehrschichtigen und aus mehreren unterschiedlichen Materialien aufgebauten Kunststoffkleinteilen des Stands der Technik, die nur sehr schwer und unvollständig der Rezyklierung zuführbar sind, handelt es sich bei den dünnwandigen Kunststoffkleinteilen gemäss der Erfindung um einschichtig aufgebaute, einstoffige Teile aus PEF, die sehr einfach und zur Gänze rezyklierbar sind.

## Patentansprüche

1. Verfahren zur Herstellung dünnwandiger Kunststoffkleinteile mit einer mittleren Wandstärke kleiner als 1,5 mm, **dadurch gekennzeichnet, dass** die Kunststoffkleinteile in einem Kunststoffspritzgiessverfahren aus Polyethylenfuranoat (PEF) mit einer Viskosität von 0,4 dl/g bis 0,7 dl/g, vorzugsweise kleiner als 0,6 dl/g, gemessen nach einer Messmethode gemäss ASTM D4603, hergestellt werden, welches beim Kunststoffspritzen einen Wassergehalt von weniger als 100 ppm, vorzugsweise weniger als 30 ppm, aufweist.

2. Verfahren nach Anspruch 1, **dadurch gekennzeichnet, dass** für das Kunststoffspritzgiessverfahren ein PEF verwendet wird, welches 10% bis 100% w/w bio-basiertes PEF umfasst.

3. Verfahren nach Anspruch 1 oder 2, **dadurch gekennzeichnet, dass** für das Kunststoffspritzgiessverfahren ein PEF verwendet wird, welches bis zu 100% Regeneratmaterial umfasst.

4. Verfahren nach einem der Ansprüche 1 bis 3, **dadurch gekennzeichnet, dass** das PEF physikalisch oder chemisch geschäumt wird, bis es einen Schäumungsgrad von 0 % bis 30% aufweist.

5. Verfahren nach einem der vorangehenden Ansprüche, **dadurch gekennzeichnet, dass** das PEF bei einer Trocknungstemperatur getrocknet wird, welche grösser als 100°C, aber kleiner als 200°C ist.

6. Verfahren nach Anspruch 5, **dadurch gekennzeichnet, dass** das PEF während des Trocknungsprozesses gerührt wird.

7. Verfahren nach Anspruch 5 oder 6, **dadurch gekennzeichnet, dass** der Trocknungsprozess des PEF durch die Zufuhr von Energie in Form von Mikrowellenstrahlung unterstützt wird.

8. Verfahren nach einem der Ansprüche 5 bis 7, **dadurch gekennzeichnet, dass** die Trocknung des PEF unter Vakuum oder in einer Inertgasatmosphäre erfolgt.

9. Verfahren nach einem der vorangehenden Ansprüche, **dadurch gekennzeichnet, dass** dem PEF ein Anteil von Nukleierungsmitteln beigemengt wird, der 5 % w/w nicht überschreitet.

10. Verfahren nach einem der Ansprüche 1 bis 8, **dadurch gekennzeichnet, dass** dem PEF ein Anteil von Copolymeren beigemengt wird, der 10% w/w nicht überschreitet.

11. Dünnwandiges Kunststoffkleinteil mit einer mittleren Wandstärke von kleiner als 1,5 mm, hergestellt in einem Spritzgiessverfahren gemäss einem der Ansprüche 1 bis 10, **dadurch gekennzeichnet, dass** es im wesentlichen aus einschichtig ausgebildetem PEF besteht.

12. Dünnwandiges Kunststoffkleinteil gemäss Anspruch 11, **dadurch gekennzeichnet, dass** es eine mittlere Wandstärke aufweist, die kleiner ist als 1 mm.

13. Dünnwandiges Kunststoffkleinteil nach Anspruch 11 oder 12, **dadurch gekennzeichnet, dass** es wenigstens bereichsweise einen Kristallisationsgrad von bis zu 50 % aufweist.

14. Dünnwandiges Kunststoffkleinteil nach einem der Ansprüche 11 bis 13, **dadurch gekennzeichnet, dass** es als ein Verschluss, beispielsweise für eine Getränkeverpackung, als Teil einer Verpackung, beispielsweise als eine Tubenschulter, als ganze Verpackung, wie z.B. als Becher, als kapselartiger Behälter oder blisterartige Verpackung (Pad) für Kaffee, Kakao oder Tee, ausgebildet ist.

15. Dünnwandiges Kunststoffkleinteil nach einem der Ansprüche 11 bis 14, **dadurch gekennzeichnet, dass** es als eine Verpackung für sauerstoffempfindliche Füllgüter ausgebildet ist.

## Claims

1. Process for the production of thin-walled small plastics parts with an average wall thickness below 1.5mm, **characterized in that** the small plastics parts are produced in a plastics injection-moulding process from polyethylene furanoate (PEF) with a viscosity from 0.4 dl/g to 0.7 dl/g, preferably below 0.6 dl/g, measured by a method in accordance with ASTM D4603, the water content of the said PEF on injection-moulding of the plastic being less than 100 ppm, preferably less than 30 ppm.

2. Process according to Claim 1, **characterized in that** for the plastics injection-moulding process a PEF is used which comprises from 10% to 100% by weight of biobased PEF.

3. Process according to Claim 1 or 2, **characterized in that** for the plastics injection-moulding process a PEF is used which comprises up to 100% of reground material.

4. Process according to any of Claims 1 to 3, **characterized in that** the PEF is physically or chemically foamed until its degree of foaming is from 0% to 30%.

5. Process according to any of the preceding claims, **characterized in that** the PEF is dried at a drying temperature above 100°C but below 200°C.

6. Process according to Claim 5, **characterized in that** during the drying process the PEF is stirred.

7. Process according to Claim 5 or 6, **characterized in that** the process of drying the PEF is assisted by introducing energy in the form of microwave radiation.

8. Process according to any of Claims 5 to 7, **characterized in that** the drying of the PEF takes place in vacuo or in an inert gas atmosphere.

9. Process according to any of the preceding claims, **characterized in that** a proportion of nucleating agents not exceeding 5% by weight is admixed with the PEF.

10. Process according to any of Claims 1 to 8, **characterized in that** a proportion of copolymers not exceeding 10% by weight is admixed with the PEF.

11. Thin-walled small plastics part with average wall thickness below 1.5 mm, produced in an injection-moulding process according to any of Claims 1 to 10, **characterized in that** it consists essentially of PEF configured as a single layer.

12. Thin-walled small plastics part according to Claim 11, **characterized in that** its average wall thickness is below 1 mm.

13. Thin-walled small plastics part according to Claim 11 or 12, **characterized in that** it has, at the least in one region, a degree of crystallinity of up to 50%.

14. Thin-walled small plastics part according to any of Claims 11 to 13, **characterized in that** it is configured as a closure, for example for drinks packaging, as part of a packaging, for example as a tube shoulder, as an entire packaging, for example as a pot, as a capsule-type container or a blister-type packaging (pad) for coffee, cocoa or tea.

15. Thin-walled small plastics part according to any of Claims 11 to 14, **characterized in that** it is configured as a packaging for oxygen-sensitive contents.

## Revendications

1. Procédé de fabrication de petites pièces en plastique à paroi mince présentant une épaisseur de paroi moyenne inférieure à 1,5 mm, **caractérisé en ce que** les petites pièces en plastique sont fabriquées selon un procédé de moulage par injection de matière plastique, à partir de polyéthylène-furanoate (PEF) qui a une viscosité allant de 0,4 dl/g à 0,7 dl/g, de préférence inférieure à 0,6 dl/g, mesurée conformément à une méthode de mesure selon ASTM D4603, et qui, lors de l'injection de la matière plastique, présente une teneur en eau de moins de 100 ppm, de préférence de moins de 30 ppm.

2. Procédé selon la revendication 1, **caractérisé en ce que** l'on utilise pour le procédé de moulage par injection de matière plastique, un PEF qui comporte de 10 % à 100 % en poids de PEF biosourcé.

3. Procédé selon la revendication 1 ou 2, **caractérisé en ce que** l'on utilise pour le procédé de moulage par injection de matière plastique, un PEF qui comporte jusqu'à 100 % de matière régénérée.

4. Procédé selon l'une des revendications 1 à 3, **caractérisé en ce que** l'on fait mousser le PEF par voie physique ou chimique, jusqu'à ce qu'il présente un degré de moussage allant de 0 % à 30 %.

5. Procédé selon l'une des revendications précédentes, **caractérisé en ce que** l'on fait sécher le PEF à une température de séchage qui est supérieure à 100 °C mais inférieure à 200 °C.

6. Procédé selon la revendication 5, **caractérisé en ce que** l'on remue le PEF pendant le processus de séchage.

7. Procédé selon la revendication 5 ou 6, **caractérisé en ce que** le processus de séchage du PEF est favorisé par l'apport d'énergie sous forme de rayonnement micro-ondes.

8. Procédé selon l'une des revendications 5 à 7, **caractérisé en ce que** le séchage du PEF est réalisé sous vide ou dans une atmosphère de gaz inerte.

9. Procédé selon l'une des revendications précédentes, **caractérisé en ce que** l'on mélange au PEF une proportion d'agents nucléants qui ne dépasse pas 5 % en poids.

10. Procédé selon l'une des revendications 1 à 8, **caractérisé en ce que** l'on mélange au PEF une proportion de copolymères qui ne dépasse pas 10 % en poids.

11. Petite pièce en plastique à paroi mince présentant une épaisseur de paroi moyenne inférieure à 1,5 mm et fabriquée avec un procédé de moulage par injection selon l'une des revendications 1 à 10, **caractérisée en ce qu'**elle est constituée essentiellement de PEF réalisé en une seule couche.

12. Petite pièce en plastique à paroi mince selon la revendication 11, **caractérisée en ce qu'**elle présente une épaisseur de paroi moyenne qui est inférieure à 1 mm.

13. Petite pièce en plastique à paroi mince selon la revendication 11 ou 12, **caractérisée en ce qu'**elle présente au moins localement un degré de cristallisation allant jusqu'à 50 %.

14. Petite pièce en plastique à paroi mince selon l'une des revendications 11 à 13, **caractérisée en ce qu'**elle est réalisée comme fermeture, par exemple pour un emballage de boisson, comme partie d'un emballage, par exemple en tant qu'épaulement de tube, comme emballage complet, par exemple sous forme de gobelet, de récipient de type capsule ou d'emballage de type blister (dosette) pour le café, le cacao ou le thé.

15. Petite pièce en plastique à paroi mince selon l'une des revendications 11 à 14, **caractérisée en ce qu'**elle est réalisée comme emballage pour des produits de remplissage sensibles à l'oxygène.
